Europäisches Patentamt

European Patent Office

Office européen des brevets

(11) Veröffentlichungsnummer: **0 360 137**
**A2**

# (12) EUROPÄISCHE PATENTANMELDUNG

(21) Anmeldenummer: 89116910.4

(22) Anmeldetag: 13.09.89

(51) Int. Cl.5: **C08L 33/06** , //(C08L33/06, 33:06),(C08L33/06,25:12), (C08L33/06,27:06)

(30) Priorität: 20.09.88 DE 3831874

(43) Veröffentlichungstag der Anmeldung:
28.03.90 Patentblatt 90/13

(84) Benannte Vertragsstaaten:
**BE DE ES FR GB IT NL**

(71) Anmelder: **BASF Aktiengesellschaft**
**Carl-Bosch-Strasse 38**
**D-6700 Ludwigshafen(DE)**

(72) Erfinder: **Bueschl, Rainer, Dr.**
**Hollandstrasse 14**
**D-6701 Roedersheim-Gronau(DE)**
Erfinder: **Klaerner, Peter, Dr.**
**Hauptstrasse 62**
**D-6719 Battenberg(DE)**

(54) **Transparente thermoplastische Mischungen.**

(57) Transparente Polymermischung aus

(a1) 99,9 bis 0,1 Gew.% eines Methyl(meth)acrylat enthaltenden Homopolymerisats oder eines Copolymerisats mit bis zu 20 Gew.% Einheiten (Meth)Acrylsäurealkylester mit einem Alkylrest mit mehr als ein bis zehn C-Atomen und bis zu 10 Gew.-% weiteren Comonomeren
oder

(a2) 99,9 bis 0,1 Gew.% eines Styrol oder α-Methylstyrol und Acrylnitril enthaltenden Copolymerisats mit einem Anteil von 5 bis 30 Gew.% Einheiten des Acrylnitrils
oder

(a3) 99,9 bis 0,1 Gew.% eines eventuell schlagzäh modifizierten Polyvinylchlorid-Homopolymerisats oder -Copolymerisats mit bis zu 20 Gew.-% Comonomeren
und

(b) 0,1 bis 99,9 Gew.% eines Cycloalkyl(meth)acrylat-Homopolymerisats oder -Copolymerisats mit bis zu 99,9 Gew.% Einheiten von Methacrylsäuremethylester.

EP 0 360 137 A2

## Transparente thermoplastische Mischungen

Es gibt einen offensichtlichen Bedarf für transparente polymere Produkte für die unterschiedlichsten Anwendungen wie z.B. den Verpackungsbereich. Bei transparenten Polymerprodukten sind oft Eigenschaftsvariationen erwünscht, um die Produkte einem neuen Einsatzgebiet zugänglich zu machen. Eigenschaften, die verbessert werden müssen, sind z.B. die Wärmeformbeständigkeit, Haftung, Lichtstabilität.

Im allgemeinen ist es schwierig oder unmöglich, bei einem chemisch einheitlichen Polymeren die gewünschte Eigenschaftskombination zu erreichen. Dies wird daher in zunehmendem Maße durch die Verknüpfung verschiedener Polymerer durch sog. Blenden (Mischen) versucht.

Nun ist es bekannt, daß chemisch verschiedene Polymere im allgemeinen miteinander unverträglich, d.h. nach den Maßstäben der niedermolekularen Chemie nicht mischbar bzw. ineinander löslich sind. Daher sind physikalische Mischungen der meisten Polymeren, die z.B. in der Schmelze hergestellt wurden, üblicherweise opak, also undurchsichtig. Theorie und Praxis von Polymerverträglichkeit und Blending sind beschrieben in dem Buch Polymer-Blends, Vol. 1 und 2, von D.R. Paul und Seymour Newman (New York, San Francisco, London 1978).

Transparente Mischungen werden von unverträglichen Polymeren nur erhalten, wenn der Brechungsindex der einzelnen Komponenten nicht weiter als $\pm$ 0,005 Einheiten voneinander abweicht (dies ist beschrieben in der US-PS 4 083 896), oder in den relativ seltenen Fällen, in denen die Mischungspartner thermodynamisch miteinander verträglich sind. Polymethylmethacrylat und verschiedene Styrolacrylnitrilcopolymere erfüllen diese Bedingungen in einem vielfältigen Bereich, obwohl sowohl Polymethylmethacrylat als auch die copolymerisierten Styrolacrylnitrile unterschiedliche Brechungsindices aufweisen. Dies ist ganz offensichtlich eine Folge der Kompatibilität der beiden Komponenten auf molekularer Ebene (FR-PS 1 526 375).

Ein weiteres Beispiel molekular verträglicher Polymerblends ist in der US-PS 4 508 871 beschrieben, transparente Mischungen aus Styrol/Acrylsäure-Copolymerisaten mit Polymethylmethacrylat bzw. mit Styrol/Acrylnitril-Copolymerisat oder auch entsprechenden schlagzäh-modifizierten Derivaten. Man weist darauf hin, daß weitere verträgliche und damit transparente Polymerblends zugänglich sein könnten, auch z.B. Mischungen auf Basis von Polymethylmethacrylat mit Derivaten der Methacrylsäure, um damit z.B. die hohe Witterungsstabilität von Methacrylsäurederivaten beizubehalten und ebenfalls gleichzeitig Transparenz auch in den Mischprodukten zu gewährleisten. Es wird jedoch kein Beispiel genannt, da wohl keines bekannt ist.

Weiterhin ist bekannt, daß Polymere von Cyclohexylmethacrylat oder Cyclohexylacrylat bzw. deren Copolymere mit Methylmethacrylat molekular verträglich sind mit Polystyrol (vgl. DE 36 32 369).

Es besteht somit Bedarf nach weiteren, auf molekularer Basis verträglichen Polymermischungen, die aufgrund dieser Tatsache transparente Produkte liefern und damit auch neue Eigenschaftskombinationen erwarten lassen.

Die Erfindung beschreibt transparente Polymerblends auf Basis von Polymethylmethacrylat, Styrol/Acrylnitril-Copolymerisaten oder Polyvinylchlorid als Komponente A und einer erfindungsgemäß wesentlichen Komponente B, basierend auf Acrylsäure- oder Methacrylsäurecycloalkylestern bzw. Copolymerisaten dieser Methacrylsäurecycloalkylester mit Methacrylsäuremethylester.

Unmittelbarer Erfindungsgegenstand ist eine transparente Polymermischung aus

(a1) 99,9 bis 0,1 Gew.% eines Methyl(meth)acrylat enthaltenden Homopolymerisats oder eines Copolymerisats mit bis zu 20 Gew.% Einheiten (Meth)Acrylsäurealkylester mit einem Alkylrest mit mehr als ein bis zehn C-Atomen und bis zu 10 Gew.-% weiteren Comonomeren

oder

(a2) 99,9 bis 0,1 Gew.% eines Styrol oder $\alpha$-Methylstyrol und Acrylnitril enthaltenden Copolymerisats mit einem Anteil von 5 bis 30 Gew.% Einheiten des Acrylnitrils

oder

(a3) 99,9 bis 0,1 Gew.% eines eventuell schlagzäh modifizierten Vinylchlorid-Homopolymerisats oder -Copolymerisats mit bis zu 20 Gew.-% Comonomeren

und

(b) 0,1 bis 99,9 Gew.% eines Cycloalkyl(meth)acrylat-Homopolymerisats oder -Copolymerisats mit bis zu 99,9 Gew.% Einheiten von Methacrylsäuremethylester.

Als Cycloalkyl(meth)acrylat ist bevorzugt Cyclohexyl(meth)acrylat. Vom wirtschaftlichen Standpunkt ebenfalls günstig ist Cyclopentyl(meth)acrylat als monomerer Baustein. Das Cycloalkyl(meth)acrylat kann im Ring ein- oder zweifach durch $C_1$-$C_4$-Alkyl substituiert sein.

Die Erfindung beruht somit auf der überraschenden Beobachtung, daß die aus DE 36 32 369 bekannte Eigenschaft von Polycyclohexylacrylaten, mit Polystyrol verträglich zu sein, in weitem Umfange verallgemeinerungsfähig ist. Überraschend deshalb, weil bekannt ist ( G.L. Molau, Polymer Letters 3, 1007-1015 (1965); R. Casper, L. Morbitzer, Angew. Makromol. Chem. 58/59, 1-35 (1977), daß SAN-Copolymere bereits bei wenigen Prozent Unterschied im Acrylnitril-(AN-)Gehalt nicht mehr miteinander mischbar sind. Es ist daher nicht trivial, anzunehmen, daß die Verträglichkeit eines Polymeren (hier z.B. Polycyclohexylmethacrylat) mit Polystyrol (DE-OS 3632369) darauf schließen läßt, daß hiermit z.B. auch SAN-Copolymere mit AN-Gehalten bis zu einem Anteil von 25-30 % AN mit diesem auf molekularer Ebene mischbar sind.

Als Methyl(meth)acrylat-Copolymere (a1) können erfindungsgemäß z.B. Copolymerisate von Methylmethacrylat mit bis zu 50 Gew.% Alkylacrylaten mit Alkylketten mit 2 bis 10 C-Atomen verwendet werden:

Bevorzugt sind Alkylacrylatgehalte von unter 15 Gew.%.

Als Styrol/Acrylnitril-Copolymere (a2) können Copolymere mit bis zu 30 Gew.% AN verwendet werden. Bevorzugt sind Copolymere mit bis zu 25 Gew.% Acrylnitril; besonders bevorzugt sind Copolymere mit bis zu 15 Gew.-% Acrylnitril.

Als Vinylchlorid-Polymere können handelsübliche PVC-Typen, u.a. auch in ihrer schlagzäh modifizierten Form eingesetzt werden.

Beispiele

Herstellung der Cyclohexylmethacrylathomo- und -copolymeren

Zur Gewinnung kleinerer Mengen von Homo- und Copolymeren von Cyclohexylmethacrylat wurde absatzweise im Druckreaktor polymerisiert. Hierzu wurde das Monomere bzw. die Mischung der Monomeren eingefüllt und mit 0,1 % Benzoylperoxid, 0,1 % Dicumylperoxid und 0,2 % tert. Dodecylmerkaptan versetzt. Anschließend wurde 4 mal mit Stickstoff gespült, verschlossen und nach folgendem Temperaturprogramm polymerisiert: 24 Stunden bei 80°C, dann 8 Stunden bei 100°C, weitere 8 h bei 120°C und schließlich weitere 8 Stunden bei 140°C. Die Endprodukte enthielten flüchtige Anteile von weniger als 2 %.

Eine größere Menge an Homo- oder Copolymeren erhält man wie folgt:

In einem 5 l-Metallkessel mit Ankerrührer werden 1900 g Monomeres bzw. Monomerenmischung zusammen mit 0,2 % tert. Dodecylmerkaptan und 0,1 % Benzoylperoxid eingefüllt und bei 80-85°C gerührt (200 Upm). Es stellt sich eine Umsatzgeschwindigkeit um 10 % pro Stunde ein. Bei einem Feststoffgehalt von 40-50 % wird 1800 g Wasser mit 36 g eines handelsüblichen Schutzkolloids (Luviskol K 90) und 1,8 g Natriumphosphat zugegeben und in Suspension auspolymerisiert. Die Rührgeschwindigkeit beträgt hierbei 300 Upm, die Temperatur wird schrittweise erhöht von je 3 Stunden bei 110°C und 3 Stunden bei 130°C auf 4 Stunden bei 140°C. Die Perlen werden abgetrennt, gewaschen und anschließend bei 60°C im Vakuum getrocknet.

Die Umsetzung in beiden Verfahrensvarianten verlief praktisch vollständig, so daß die Zusammensetzung der Polymeren der Mischung der Monomeren entspricht.

Herstellung der Polymerenmischungen (Blends)

Zur Herstellung der Mischungen wurden die Bestandteile getrennt in Essigsäureethylester in einer Konzentration von jeweils 10 Gew.% gelöst, die Lösungen im Verhältnis 1 : 1 gemischt und anschließend je 3 ml dieser Lösungen in einem Pfännchen (Ø 5 cm) vom Lösungsmittel befreit. Dann wurde die Transparenz des Filmes beurteilt. Die Ergebnisse dieser Untersuchungen und die dabei eingesetzten Copolymeren sind in der folgenden Tabelle zusammengestellt. Die Viskositätszahl VZ wurde nach DIN 53726 gemessen an 0,5 %iger Lösung in Chloroform bei 23°C.

EP 0 360 137 A2

Tabelle 1

| Verhalten von Mischungen von Homo- bzw. Copolymeren aus MMA und Cyclohexylmethacrylat (CHMA) und Polymethylmethacrylat; zum Vergleich dient Polyisobutylmethacrylat (IBMA) | | | | |
|---|---|---|---|---|
| Beispiel | MMA : CHMA | | VZ [ml/g] | 1:1-Mischungen mit Degalan® 8* |
| 1 | 100 | - | 78 | transparent |
| 2 | 90 | 10 | 75 | transparent |
| 3 | 80 | 20 | 73 | transparent |
| 4 | 70 | 30 | 76 | transparent |
| 5 | 60 | 40 | 76 | transparent |
| 6 | 50 | 50 | 72 | transparent |
| 7 | 40 | 60 | 74 | transparent |
| 8 | 30 | 70 | 69 | transparent |
| 9 | 20 | 80 | 72 | transparent |
| 10 | 10 | 90 | 71 | transparent |
| 11 | - | 100 | 68 | transparent |
| Vergleich | (100 IBMA) | | 74 | opak |

\* Handelsname der Degussa für Polymethylmethacrylat mit 1 % Butylacrylat als Comonomer, VZ: 57 ml/g

Wie aus der Tabelle hervorgeht, sind sämtliche 1 : 1-Mischungen von Polymethylmethacrylat mit reinem Polycyclohexylmethacrylat und dessen Copolymeren mit Methacrylsäuremethylester transparent. Die molekulare Verträglichkeit der Komponenten läßt sich herleiten aus der Tatsache, daß z.B. reines Polycyclohexylmethacrylat einen Brechungsindex von 1,507 hat, während reines PMMA einen Brechungsindex von 1,490 aufweist, die Differenz der Brechungsindices also deutlich höher ist als die für eine Transparenz von unverträglichen Polymeren erforderlichen Höchstgrenze von 0,005 Einheiten. Die hier offensichtliche Verträglichkeit von 2 Estern der Methacrylsäure ist keine verallgemeinerbare intrinsische Eigenschaft von Estern der Methacrylsäure. Zum Vergleich diente eine Mischung eines polymeren Methacrylsäureisobutylesters (IBMA) mit dem Handelsprodukt. In diesem Fall ist kein transparenter Film und damit keine verträgliche Polymermischung erhältlich.

4

Tabelle 2

| Verhalten von Mischungen von Homo- bzw. Copolymeren aus MMA und Cyclohexylmethacrylat (CHMA) und SAN | | | | |
|---|---|---|---|---|
| Beispiel | MMA : CHMA | | VZ [ml/g] | 1:1-Mischungen mit SAN* |
| 1 | 100 | - | 78 | transparent |
| 2 | 90 | 10 | 75 | transparent |
| 3 | 80 | 20 | 73 | transparent |
| 4 | 70 | 30 | 76 | transparent |
| 5 | 60 | 40 | 76 | transparent |
| 6 | 50 | 50 | 72 | transparent |
| 7 | 40 | 60 | 74 | transparent |
| 8 | 30 | 70 | 69 | transparent |
| 9 | 20 | 80 | 72 | transparent |
| 10 | 10 | 90 | 71 | transparent |
| 11 | - | 100 | 68 | transparent |
| Vergleich | (100 IBMA) | | 74 | opak |

\* LURAN® 358 N; Handelsprodukt der BASF AG, Copolymeres aus 75 Gew.% Styrol und 25 % Acrylnitril; VZ in DMF: 80 ml/g

Wie aus der Tabelle hervorgeht, sind sämtliche 1 : 1-Mischungen SAN-Copolymeren mit reinem Polycyclohexylmethacrylat und dessen Copolymeren mit Methacrylsäuremethylester transparent. Die molekulare Verträglichkeit der Komponenten läßt sich herleiten aus der Tatsache, daß z.B. reines Polycyclohexylmethacrylat einen Brechungsindex von ca. 1,507 hat, während das Handelsprodukt LURAN® 358 N einen Brechungsindex von 1,572 aufweist, die Differenz der Brechungsindices also deutlich höher ist als die für eine Transparenz von unverträglichen Polymeren erforderlichen Höchstgrenze von 0,005 Einheiten. Die hier offensichtliche Verträglichkeit von Cycloalkylester der Methacrylsäure mit Styrol/Acrylnitril-Copolymeren ist keine verallgemeinerbare intrinsische Eigenschaft von Estern der Methacrylsäure. Zum Vergleich wurde ein polymerer Methacrylsäureisobutylester (IBMA) gemischt mit dem gleichen SAN nach der gleichen Methode wie oben. In diesem Fall ist kein transparenter Film, d.h. keine verträgliche Polymermischung erhältlich.

Die Verträglichkeit erstreckt sich, wie aus der nachfolgenden Tabelle 3 hervorgeht, über einen weiten Bereich an Acrylnitrilgehalten bei den Styrol/Acrylnitril-Copolymeren. Diese Copolymeren wurden in dem Fachmann bekannter Weise durch Polymerisation im kontinuierlich durchflossenen Rührkessel hergestellt, um chemisch einheitlich aufgebaute Polymere zu erhalten.

Tabelle 3

| AN-Gehalt des S/AN-Copolymeren in Gew.% | VZ in DMF [ml/g] | CHMA-Gehalt des MMA/CHMA-Copolymeren in Gew.% | VZ in CHCl₃ [ml/g] | Lichtdurchlässigkeit der 1:1-Mischungen |
|---|---|---|---|---|
| 7 | 71 | 25 | 69 | transparent |
| 11 | 76 | 25 | 69 | transparent |
| 15 | 78 | 25 | 69 | transparent |
| 18 | 76 | 25 | 69 | transparent |
| 35 | 75 | 25 | 69 | opak |
| 7 | 71 | 50 | 74 | transparent |
| 11 | 76 | 50 | 74 | transparent |
| 15 | 78 | 50 | 74 | transparent |
| 18 | 76 | 50 | 74 | transparent |
| 35 | 75 | 50 | 74 | opak |
| 7 | 71 | 75 | 73 | transparent |
| 11 | 76 | 75 | 73 | transparent |
| 15 | 78 | 75 | 73 | transparent |
| 18 | 76 | 75 | 73 | transparent |
| 35 | 75 | 75 | 73 | opak |

Tabelle 4

| Verhalten von Mischungen von Homo- bzw. Copolymeren aus MMA und Cyclohexylmethacrylat (CHMA) und PVC | | | | |
|---|---|---|---|---|
| Beispiel | MMA : CHMA | | VZ [1] [ml/g] | 1:1-Mischungen Vinoflex 6115 [*] |
| 1 | 100 | - | 78 | transparent |
| 2 | 90 | 10 | 75 | transparent |
| 3 | 80 | 20 | 73 | transparent |
| 4 | 70 | 30 | 76 | transparent |
| 5 | 60 | 40 | 76 | transparent |
| 6 | 50 | 50 | 72 | transparent |
| 7 | 40 | 60 | 74 | transparent |
| 8 | 30 | 70 | 69 | transparent |
| 9 | 20 | 80 | 72 | transparent |
| 10 | 10 | 90 | 71 | transparent |
| 11 | - | 100 | 68 | transparent |
| Vergleich | (100 IBMA) | | 74 | opak |

[*] Handelsprodukt der BASF AG
Polyvinylchlorid Homopolymer K-Wert nach DIN 53726 = 61

Wie aus der Tabelle hervorgeht, sind sämtliche 1 : 1-Mischungen von Polyvinylchlorid mit reinem Polycyclohexylmethacrylat und dessen Copolymeren mit Methacrylsäuremethylester transparent. Die molekulare Verträglichkeit der Komponenten läßt sich herleiten aus der Tatsache, daß z.B. reines Polycyclohexylmethacrylat einen Brechungsindex von ca. 1,507 hat, während reines PVC einen Brechungsindex von ca. 1.545 aufweist, die Differenz der Brechungsindices also deutlich höher ist als die für eine Transparenz von unverträglichen Polymeren erforderlichen Höchstgrenze von 0,005 Einheiten. Zum Vergleich wurde Polymethacrylsäureisobutylester (IBMA) gemischt mit Polyvinylchlorid. In diesem Fall ist kein transparenter Film

6

und damit keine verträgliche Polymermischung erhältlich.

**Ansprüche**

1. Transparente Polymermischung aus

(a1) 99,9 bis 0,1 Gew.% eines Methyl(meth)acrylat enthaltenden Homopolymerisats oder eines Copolymerisats mit bis zu 20 Gew.% Einheiten (Meth)Acrylsäurealkylester mit einem Alkylrest mit mehr als ein bis zehn C-Atomen und bis zu 10 Gew.-% weiteren Comonomeren

oder

(a2) 99,9 bis 0,1 Gew.% eines Styrol oder α-Methylstyrol und Acrylnitril enthaltenden Copolymerisats mit einem Anteil von 5 bis 30 Gew.% Einheiten des Acrylnitrils

oder

(a3) 99,9 bis 0,1 Gew.% eines eventuell schlagzäh modifizierten Polyvinylchlorid-Homopolymerisats oder -Copolymerisats mit bis zu 20 Gew.-% Comonomeren

und

(b) 0,1 bis 99,9 Gew.% eines Cycloalkyl(meth)acrylat-Homopolymerisats oder -Copolymerisats mit bis zu 99,9 Gew.% Einheiten von Methacrylsäuremethylester.

2. Mischung nach Anspruch 1, enthaltend als Mischungspartner (b) ein im Cyclohexanring unsubstituiertes oder durch $C_1$-$C_4$-Alkyl ein- oder zweifach substituiertes Polycyclohexylmethacrylat oder Polycyclohexylacrylat oder ein entsprechendes Copolymerisat.